# EUROPEAN PATENT APPLICATION

(11) **EP 1 712 276 A1**
(43) Date of publication of application: **18.10.2006**
(21) Application number: 06252034.1
(22) Date of filing: 12.04.2006
(51) Int. Cl.: B01J 20/282

(54) **Carbon nanotube stationary phases for chromatography**

(30) Priority: 15.04.2005 US 107459
(71) Applicant: Agilent Technologies, Inc., Palo Alto CA 94306-2024 (US)
(72) Inventor: Lu, Jennifer Qing, Loveland CO 80537-0599 (US); Yang, Dan-Hui, Loveland CO 80537-0599 (US); Yin, Hongfeng, Loveland CO 80537-0599 (US); Roitman, Daniel, Loveland CO 80537-0599 (US)
(74) Representative: Exell, Jonathan Mark

(57) **Abstract**

A packing material (15) for a chromatography column (7) is described. The packing material (15) comprises a support structure (17). The packing material (15) also comprises a stationary phase adjacent to the support structure and comprising a carbon nanotube material (19).

## Description

### Technical Field

The technical field of the invention relates to chromatography and, in particular, to stationary phases for chromatography.

### Background

A variety of analytical methods can be used for separating components of a chemical mixture. Over the years, chromatography has gained prominence because of its ability to handle a wide variety of chemical mixtures with high selectivity, high sensitivity, and rapid throughput. A variety of separation techniques have been developed for use in chromatography, and many of these separation techniques involve flowing a mobile phase over or through a stationary phase. One particular type of separation technique that is used is Liquid Chromatography ("LC"), which comprises a number of variants, such as reverse phase LC, normal phase LC, ion exchange LC, and the like.

In a conventional LC system, components to be separated are dissolved in a suitable liquid and introduced into a chromatography column. The liquid carrying the components is then pushed through the chromatography column, which is packed with a stationary phase that has adsorbent characteristics. The components can exhibit different levels of adsorption onto the stationary phase, thus allowing the components to be separated as they exit the chromatography column.

One continuing challenge in LC is achieving a desired resolution for separating components of a chemical mixture. Poor resolution is typically characterized by peaks of different components overlapping excessively in a resulting chromatogram. For example, certain biomolecules, such as oligosaccharides, can occur as isomers that differ slightly from one another in terms of chirality or structure, and effective separation of such biomolecules using conventional stationary phases remains a continuing challenge.

Glycosylation is one of the major post-translational modifications of proteins in a biological system. Glycosylation typically involves modifying proteins with oligosaccharides, such as via O-links at serine or threonine residues or via N-links at asparagine residues, thus producing glycoproteins. Glycosylation can determine a variety of protein and cellular functions, such as those related to immune system response, pathogens homing on host tissues, cell division processes, and a cancer cell's camouflage to escape detection by the immune system. Accordingly, characterizing glycoproteins as well as their sites of modification by oligosaccharides can play an important role in modem biology.

Currently, glycoproteins are typically characterized by cleavage or hydrolysis with specific enzymes followed by analysis of the resulting fragments. Such hydrolysis can produce highly complex chemical mixtures of glycoproteins, glycopeptides, and oligosaccharides. The glycoproteins, glycopeptides, and oligosaccharides are typically separated by ion exchange LC or reverse phase LC and then detected using Mass Spectroscopy ("MS"). Ion exchange LC can result in high salt concentrations, thus complicating downstream detection using MS. In connection with reverse phase LC, Porous Graphitized Carbon ("PGC") and particles coated with n-Octadecane are typically used to separate glycopeptides and oligosaccharides under acidic conditions. It has been demonstrated that PGC can provide benefits over n-Octadecane in terms of resolution for separating glycopeptides and oligosaccharides. However, PGC is often manufactured under extremes conditions, and, thus, the resulting characteristics of PGC can be difficult to control.

### Summary

The invention provides a chromatography system. The chromatography system comprises a chromatography column comprising a stationary phase that is exposed to a chemical mixture when the chemical mixture passes through the chromatography column. The stationary phase comprises a carbon nanotube material. The chromatography system also comprises a detector positioned with respect to the chromatography column to detect components of the chemical mixture.

The invention also provides a chromatography column. The chromatography column comprises a channel defining a passageway. The chromatography column also comprises a nanotube material positioned in the passageway and providing an adsorbent surface.

The invention also provides a packing material for a chromatography column. The packing material comprises a support structure. The packing material also comprises a stationary phase adjacent to the support structure and comprising a carbon nanotube material.

The invention further provides a chromatography method. The chromatography method comprises providing a chromatography column comprising a carbon nanotube material. The chromatography method also comprises passing a chemical mixture through the chromatography column to separate components of the chemical mixture.

Advantageously, embodiments of the invention allow components of a chemical mixture to be effectively separated, such that chromatographic analyses have a desired resolution and a desired reproducibility. For some embodiments of the invention, effective separation can be achieved by using certain nanotube materials that provide different chirality and adsorption of the components.

Other aspects and embodiments of the invention are also contemplated. The foregoing summary and the following detailed description are not meant to restrict the invention to any particular embodiment but are merely meant to describe some embodiments of the invention.

### Brief Description Of The Drawings

For a better understanding of the nature and objects of some embodiments of the invention, reference should be made to the following detailed description taken in conjunction with the accompanying drawings. In the drawings, like reference numbers are used to refer to like elements.

FIG. 1A illustrates a chromatography system implemented in accordance with an embodiment of the invention.

FIG. 1B illustrates a chromatography system implemented in accordance with another embodiment of the invention.

FIG. 1C illustrates a chromatography system implemented in accordance with a further embodiment of the invention.

FIG. 2 illustrates a packing material implemented in accordance with an embodiment of the invention.

### Detailed Description

### Definitions

The following definitions apply to some of the elements described with respect to some embodiments of the invention. These definitions may likewise be expanded upon herein.

As used herein, the singular terms "a," "an," and "the" comprise plural referents unless the context clearly dictates otherwise. Thus, for example, reference to a packing material can comprise multiple packing materials unless the context clearly dictates otherwise.

As used herein, the term "set" refers to a collection of one or more elements. Thus, for example, a set of nanotubes can comprise a single nanotube or multiple nanotubes. Elements of a set can also be referred to as members of the set. Elements of a set can be the same or different. In some instances, elements of a set can share one or more common characteristics.

As used herein, the term "adjacent" refers to being near or adjoining. Adjacent structures can be spaced apart from one another or can be in actual or direct contact with one another. In some instances, adjacent structures can be coupled to one another or can be formed integrally with one another.

As used herein with reference to a chemical mixture, the term "exposed" refers to being subject to possible interaction with the chemical mixture. In some instances, a material can be exposed to a chemical mixture if the material is subject to possible interaction with a set of components of the chemical mixture.

As used herein with reference to a chemical mixture, the term "component" refers to a portion of the chemical mixture. In some instances, a component of the chemical mixture can comprise a set of molecules that share one or more common characteristics.

As used herein, the term "mobile phase" refers to a material that carries a set of components of a chemical mixture. A mobile phase typically comprises a gas or a liquid in which a set of components of a chemical mixture can be carried upon desorption from a stationary phase. During operation of a chromatography system, a mobile phase carrying a set of components is typically flowed over or through a stationary phase.

As used herein, the term "stationary phase" refers to a material to which a set of components of a chemical mixture can be adsorbed. A stationary phase typically comprises a liquid or a solid, and, in some instances, the stationary phase is positioned in a chromatography column.

As used herein, the term "retention time" refers to the amount of time required for a component of a chemical mixture to pass through a chromatography column.

As used herein, the term "resolution" refers to a degree of separation between components of a chemical mixture that pass through a chromatography column. One measure of resolution is a degree of separation between adjacent peaks in a resulting chromatogram.

As used herein, the term "nanometer range" or "nm range" refers to a range of dimensions from about 0.1 nm to about 1,000 nm, such as from about 0.1 nm to about 500 nm, from about 0.1 nm to about 100 nm, from about 0.1 nm to about 50 nm, or from about 0.1 nm to about 10 nm.

As used herein, the term "micrometer range" or "µm range" refers to a range of dimensions from about 0.1 micrometer ("µm") to about 1,000 µm, such as from about 0.1 µm to about 500 µm, from about 0.1 µm to about 100 µm, from about 0.1 µm to about 50 µm, or from about 0.1 µm to about 10 µm.

As used herein, the term "aspect ratio" refers to a ratio of a largest dimension of a structure and an average of remaining dimensions of the structure, which remaining dimensions are orthogonal with respect to one another and with respect to the largest dimension. In some instances, remaining dimensions of a structure can be substantially the same, and an average of the remaining dimensions can substantially correspond to either of the remaining dimensions. Thus, for example, an aspect ratio of a cylinder refers to a ratio of a length of the cylinder and a cross-sectional diameter of the cylinder. As another example, an aspect ratio of a spheroid refers to a ratio of a major axis of the spheroid and a minor axis of the spheroid.

As used herein, the term "size" refers to a largest dimension of a structure. Thus, for example, a size of a cylinder refers to a length of the cylinder. As another example, a size of a spheroid refers to a major axis of the spheroid.

As used herein, the terms "hydrophilic" and "hydrophilicity" refer to an affinity for water, while the terms "hydrophobic" and "hydrophobicity" refer to a lack of affinity for water. Hydrophobic materials typically correspond to those materials to which water has little or no tendency to adhere. As such, water on a surface of a hydrophobic material tends to bead up. Hydrophobic materials can sometimes be referred to as non-wetting materials. In addition to the characteristics discussed above, hydrophobic materials can sometimes be non-polar. One measure of hydrophobicity of a material is a contact angle between a surface of the material and a line tangent to a drop of water at a point of contact with the surface. Typically, the material is considered to be hydrophobic if the contact angle is greater than about 90°, such as greater than about 100°, greater than about 105°, or greater than about 110°.

As used herein, the terms "polar" and "polarity" refer to a presence of a substantially stable dipole moment or electrical charge, while the terms "non-polar" and "non-polarity" refer to a lack of a substantially stable dipole moment or electrical charge. In some instances, materials can exhibit different degrees of polarity or non-polarity based on differences in their respective dipole moments or electrical charges. While a material is sometimes referred to herein as being non-polar, it is contemplated that the material can exhibit some detectable dipole moment or electrical charge under certain conditions.

As used herein, the terms "adsorb," "adsorbent," and "adsorption" refer to an adhesion to a surface. Typically, adsorption is a reversible process and is based on any of a wide variety of intermolecular interactions, such as Van der Waals, dispersion, dipole-dipole, hydrogen bonding, coordination, and the like.

As used herein, the terms "robust" and "robustness" refer to a mechanical hardness or strength. Robust materials typically correspond to those materials that exhibit little or no tendency to fragment under typical operating conditions, such as typical operating conditions of the packing materials described herein. One measure of robustness of a material is its Vicker microhardness expressed in kilogram/millimeter ("kg/mm"). Typically, the material is considered to be robust if its Vicker microhardness is greater than about 1,000 kg/mm.

As used herein, the term "microstructure" refers to a microscopic configuration of a material and can encompass, for example, a lattice structure, crystallinity, dislocations, grain boundaries, types of constituent structures, dimensions of constituent structures, range of defects, doping level, surface functionalization, and the like. One example of a microstructure is one comprising a Single-Walled Carbon Nanotube ("SWCNT"). Another example of a microstructure is one comprising a Multi-Walled Carbon Nanotube ("MWCNT"). A further example of a microstructure is an array or arrangement of nanotubes.

As used herein, the term "nanotube" refers to an elongated, hollow structure. In some instances, a nanotube can be represented as comprising an unfilled cylindrical shape. Typically, a nanotube comprises a cross-sectional diameter in the nm range, a length in the µm range, and an aspect ratio that is about 2 or greater. One example of a nanotube is one that comprises or is formed from carbon, namely a carbon nanotube. A carbon nanotube can be formed as a SWCNT or a MWCNT. A SWCNT can be represented as a single graphite layer that is rolled into a cylindrical shape. A SWCNT typically comprises a cross-sectional diameter that is less than about 2 nm, such as from about 0.1 nm to about 2 nm. A MWCNT can be represented as multiple graphite layers that are rolled into concentric cylindrical shapes. A MWCNT typically comprises a cross-sectional diameter that is about 3 nm or greater, such as from about 3 nm to about 100 nm. A nanotube typically comprises a substantially ordered array or arrangement of atoms and, thus, can be referred to as being substantially ordered or comprising a substantially ordered microstructure. It is contemplated that a nanotube can comprise a range of defects and can be doped or surface functionalized. Nanotubes can be formed using any of a wide variety of techniques, such as arc-discharge, laser ablation, chemical vapor deposition, and the like. Nanotubes can also be formed from certain elongated structures.

As used herein, the term "nanotube material" refers to a material that comprises or is formed from a set of nanotubes. One example of a nanotube material is one that comprises or is formed from a set of carbon nanotubes, namely a carbon nanotube material. In some instances, a nanotube material can comprise a substantially ordered array or arrangement of nanotubes and, thus, can be referred to as being substantially ordered or comprising a substantially ordered microstructure. For example, a nanotube material can comprise an array of nanotubes that are substantially aligned with respect to one another or with respect to a certain axis, direction, plane, surface, or three-dimensional shape. In other instances, a nanotube material can comprise a substantially random array or arrangement of nanotubes and, thus, can be referred to as being substantially random or comprising a substantially random microstructure.

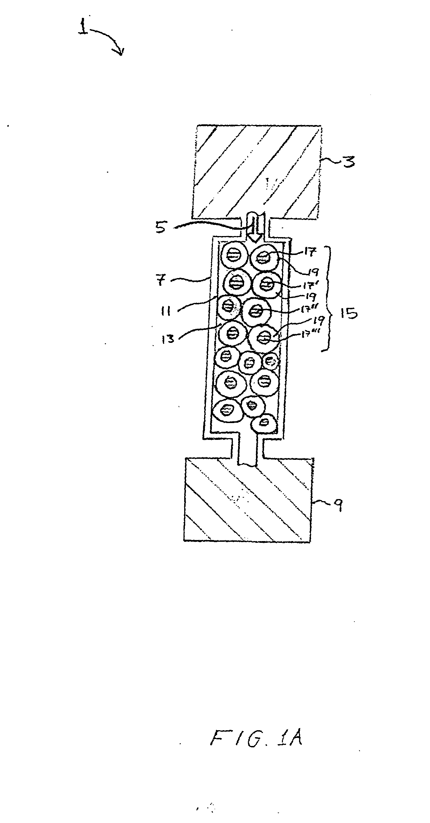

Attention first turns to FIG. 1A, which illustrates a chromatography system 1 implemented in accordance with an embodiment of the invention. In the illustrated embodiment, the chromatography system 1 is implemented as a LC system and operates to separate components of a chemical mixture, such as a set of glycoproteins, glycopeptides, oligosaccharides, or a combination thereof. However, it is contemplated that the chromatography system 1 can be implemented to separate the components using any other separation technique.

Referring to FIG. 1A, the chromatography system 1 comprises an injection device 3, which operates to deliver a sample stream 5. The sample stream 5 comprises the components to be separated by the chromatography system 1. In the illustrated embodiment, the sample stream 5 also comprises a solvent system, which can serve as a mobile phase and can comprise any of a wide variety of suitable liquids. For example, the solvent system can comprise a set of solvents in which the components can be dispersed. For certain implementations, the solvent system is relatively polar, and, in other implementations, the polarity of the solvent system can be adjusted during operation of the chromatography system 1. The injection device 3 can be implemented in any of a wide variety of ways, such as using a pump or a syringe.

As illustrated in FIG. 1A, the chromatography system 1 also comprises a chromatography column 7, which is positioned downstream with respect to the injection device 3 to receive the sample stream 5. The chromatography column 7 operates to separate the components as a function of differences in degree of adsorption of the components. As illustrated in FIG. 1A, the chromatography column 7 comprises a channel 11, which defines an internal passageway 13. In the illustrated embodiment, the channel 11 comprises a cylindrical shape and a cross-sectional diameter in the µm range, such as from about 5 µm to about 500 µm. However, it is contemplated that the channel 11 can comprise any of a wide variety of other shapes and cross-sectional diameters. The channel 11 can be formed from any of a wide variety of materials, such as ceramics, glasses, metals, metal alloys, polymers, and the like. As illustrated in FIG. 1A, the chromatography column 7 also comprises a packing material 15, which is positioned in the internal passageway 13. The packing material 15 can be packed in the internal passageway 13 using any of a wide variety of high pressure processes.

In the illustrated embodiment, the chromatography system 1 further comprises a detector 9, which is positioned downstream with respect to the chromatography column 7 to receive the sample stream 5. The detector 9 operates to detect the components that are separated by the chromatography column 7 and to produce a chromatogram. The detector 9 can be implemented in any of a wide variety of ways, such as using an ultraviolet absorption detector, a fluorescence detector, or a mass spectrometer.

During operation of the chromatography system 1, the packing material 15 is exposed to the sample stream 5 as it passes through the chromatography column 7. Characteristics of the packing material 15 can affect the degree of separation between the components comprising the sample stream 5, which, in turn, can affect results of chromatographic analyses. In particular, a component that has a greater tendency of being adsorbed onto the packing material 15 will have a longer retention time, while another component that has a reduced tendency of being adsorbed onto the packing material 15 will have a shorter retention time. Accordingly, it is desirable for the packing material 15 to provide different degrees of adsorption of the components, such that chromatographic analyses have a desired resolution. It is also desirable for the packing material 15 to provide different chirality to allow separation of those components that are chiral.

As illustrated in FIG. 1A, the packing material 15 comprises a set of support structures, such as support structures 17, 17', 17", and 17"'. In the illustrated embodiment, each of the set of support structures is formed as a support particle, which can be formed from any of a wide variety of materials, such as ceramics, glasses, metals, metal oxides, metal alloys, polymers, and the like. Thus, for example, the support particle can be formed from silica, titanium oxide, zirconium oxide, aluminum oxide, and the like. As illustrated in FIG. 1A, the packing material 15 also comprises a nanotube material 19, which serves as a stationary phase. In the illustrated embodiment, the nanotube material 19 is formed as a coating or a layer that at least partly covers each of the set of support structures. For certain implementations, the nanotube material 19 desirably comprises a carbon nanotube material. However, it is contemplated that other types of nanotube materials can be used in place of, or in combination with, a carbon nanotube material.

Advantageously, the nanotube material 19 can provide different chirality and adsorption of the components comprising the sample stream 5. In such manner, the nanotube material 19 can effectively separate the components and can provide a desired resolution for chromatographic analyses. In particular, the nanotube material 19 can provide a desired resolution when separating certain biomolecules, such as post-translationally modified forms of proteins as well as fragments or portions thereof, which can occur as isomers that differ slightly from one another in terms of chirality or structure. Examples of post-translationally modified forms of proteins comprise proteins that are phosphorylated, glycosylated, and the like. As can be appreciated, effective separation of such biomolecules can play an important role in the study of certain diseases, such as heart diseases, cancer, neurodegenerative diseases, diabetes, and the like. Without wishing to be bound by a particular theory, it is believed that the nanotube material 19 can provide an adsorbent surface that is highly hydrophobic. In turn, hydrophobicity of the adsorbent surface allows it to exhibit different affinities for the components based on differences in their polarity or non-polarity, which can result from differences in their chirality or structure. It is contemplated that hydrophobicity of the nanotube material 19 can be adjusted by, for example, surface functionalization.

In conjunction with its adsorbent characteristics, the nanotube material 19 can exhibit a number of other characteristics that are desirable for LC. Without wishing to be bound by a particular theory, it is believed that a particular microstructure of the nanotube material 19 contributes to at least some of its desirable and unusual characteristics. Advantageously, this microstructure can be precisely controlled, such as by controlling chirality, a range of defects, or dimensions of a set of nanotubes, which, in turn, allows fine-tuned control of the characteristics of the nanotube material 19. In such manner, the nanotube material 19 can provide a desired reproducibility for chromatographic analyses.

For example, another benefit of the nanotube material 19 is that it can provide an adsorbent surface comprising a high surface area. Such high surface area can enhance interaction with the components comprising the sample stream 5, which, in turn, can enhance resolution for chromatographic analysis. In addition, such high surface area can reduce the amount of the packing material 15 required to achieve a particular resolution. Another benefit of the nanotube material 19 is that it can be formed subsequent to the set of support structures being packed in the internal passageway 13. Thus, for example, the set of support structures can be packed in the internal passageway 13 using any of a wide variety of high pressure processes, and the nanotube material 19 can be formed on the set of support structures, such as by growing a set of nanotubes on the set of support structures. Such *in-situ* formation of the nanotube material 19 can reduce interstitial space within the packing material 15, which, in turn, can enhance interaction with the components comprising the sample stream 5 and further enhance resolution for chromatographic analysis. Alternatively, the nanotube material 19 can be formed on the set of support structures to form the packing material 15, which, in turn, can be packed in the internal passageway 13. A further benefit of the nanotube material 19 is that it can be highly robust when implemented in the packing material 15. Thus, the nanotube material 19 can exhibit little or no tendency to degrade under typical operating conditions of the packing material 15, thus reducing undesirable chemical background noise in a resulting chromatogram. Robustness of the nanotube material 19 can also increase operational lifetime of the packing material 15, such as by allowing the packing material 15 to be readily cleaned and to be reused for multiple tests.

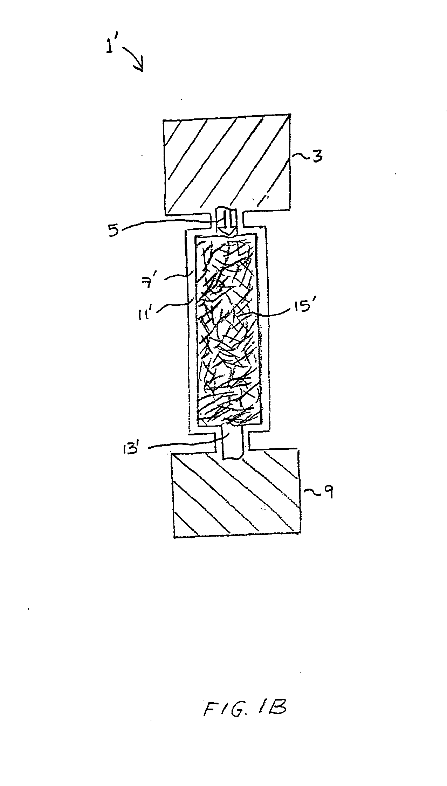

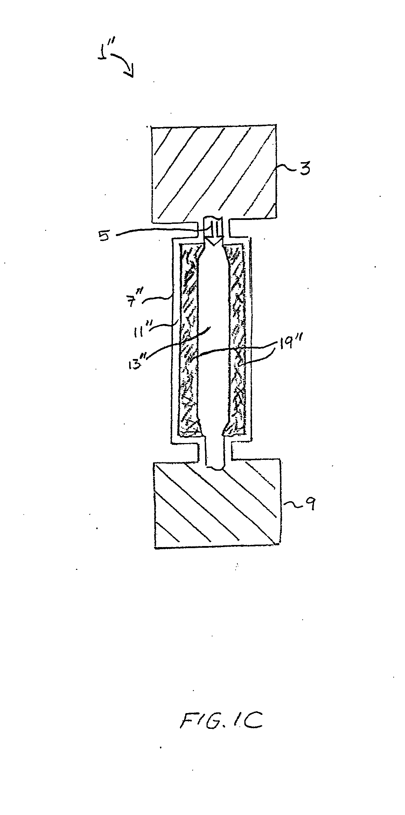

While FIG. 1A illustrates the nanotube material 19 being formed as a coating or a layer, it is contemplated that the packing material 15 can be substantially formed from the nanotube material 19 without requiring the set of support structures. In particular, FIG. 1B illustrates a chromatography system 1' implemented in accordance with another embodiment of the invention. Certain elements of the chromatography system 1' can be implemented in a similar fashion as previously described for the chromatography system 1 and, thus, need not be further described herein. As illustrated in FIG. 1B, the chromatography system 1' comprises a chromatography column 7', which comprises a channel 11' that defines an internal passageway 13'. The chromatography column 7' also comprises a packing material 15' that is positioned in the internal passageway 13'. In the illustrated embodiment, the packing material 15' comprises a set of nanotubes that are packed in the internal passageway 13' using any of a wide variety of high pressure processes. It is also contemplated that the packing material 15' can be formed by polymerization of a set of monomers along with the set of nanotubes, thus forming the chromatography column 7' in a monolithic fashion.

FIG. 1C illustrates a chromatography system 1" implemented in accordance with a further embodiment of the invention. Certain elements of the chromatography system 1" can be implemented in a similar fashion as previously described for the chromatography system 1 and, thus, need not be further described herein. As illustrated in FIG. 1C, the chromatography system 1" comprises a chromatography column 7", which comprises a channel 11" that defines an internal passageway 13". In the illustrated embodiment, the channel 11" comprises a nanotube material 19", which can be formed as a coating or a layer that at least partly covers an internal surface surrounding the internal passageway 13". It is also contemplated that the channel 11" can be substantially formed from the nanotube material 19". It is further contemplated that other portions of the chromatography column 7" can comprise the nanotube material 19". In particular, it is contemplated that any portion of the chromatography column 7" that is exposed to the sample stream 5 can comprise the nanotube material 19". In general, it is contemplated that different portions of the chromatography column 7" can comprise nanotube materials that are the same or different. Cross-sectional diameters and lengths of nanotubes comprising the different portions can be precisely controlled.

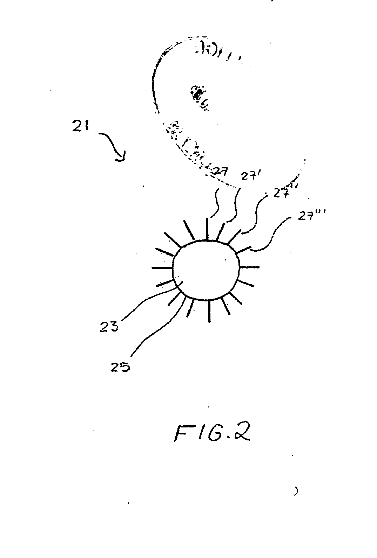

Attention next turns to FIG. 2, which illustrates a packing material 21 implemented in accordance with an embodiment of the invention. The packing material 21 comprises a support particle 23 that comprises an outer surface 25. As illustrated in FIG. 2, the support particle 23 comprises a spheroidal shape and a size in the µm range, such as from about 1 µm to about 15 µm or from about 3 µm to about 5 µm. However, it is contemplated that the support particle 23 can comprise any of a wide variety of other shapes and sizes. In the illustrated embodiment, the packing material 21 also comprises a set of carbon nanotubes, such as carbon nanotubes 27, 27', 27", and 27"', which are adjacent to and extend away from the outer surface 25. While sixteen carbon nanotubes are illustrated in FIG. 2, it is contemplated that more or less carbon nanotubes can be used for other implementations. As illustrated in FIG. 2, the set of carbon nanotubes comprise lengths in the µm range, such as from about 1 µm to about 15 µm or from about 1 µm to about 2 µm.

Referring to FIG. 2, the set of carbon nanotubes are formed as an array that is substantially ordered. In particular, the set of carbon nanotubes are substantially regularly spaced with respect to one another along the outer surface 25 and are substantially aligned radially with respect to the support particle 23. In other words, an angle defined by an axis extending through a length of each of the set of carbon nanotubes and the outer surface 25 is substantially 90°. However, it is contemplated that this angle can be adjusted to differ from 90°, such as any other angle from 0° to 180°. Also, as illustrated in FIG. 2, the set of carbon nanotubes comprise lengths that are substantially uniform. In other words, the lengths deviate less than about 50 percent in root mean square ("rms"), such as less than about 20 percent in rms or less than about 5 percent in rms. As a sample stream flows past the packing material 21, the set of carbon nanotubes can separate components comprising the sample stream and can provide a desired resolution and a desired reproducibility for chromatographic analyses. Without wishing to be bound by a particular theory, it is believed that the substantially ordered microstructure of the set of carbon nanotubes contributes to at least some of these desirable characteristics. It is contemplated that the number, spacing, alignment, and dimensions of the set of carbon nanotubes can be adjusted to tune these desirable characteristics.

The packing material 21 can be formed using any of a wide variety of techniques. In particular, the set of carbon nanotubes can be grown on the support particle 23 using, for example, chemical vapor deposition. Typically, chemical vapor deposition uses a hydrocarbon gas as a carbon feedstock and catalysts as "seeds" to grow carbon nanotubes. Examples of catalysts comprise particles that comprise sizes in the nm range and that are formed from metals, metal oxides, and metal alloys, such as Fe, Fe/Mo, Co, Co/Mo, Ni, Fe/Pt, and the like. Growth of carbon nanotubes can involve deposition or formation of catalysts used for chemical vapor deposition. For example, the outer surface 25 can comprise amino or hydroxyl functional groups, and catalysts can be deposited on the outer surface 25 using a suitable catalyst suspension, such as a suspension of Fe₂O₃ particles. As another example, the outer surface 25 can be charged by attachment of suitable functional groups. Catalysts can also be charged by attachment of suitable surfactants. When the outer surface 25 and the catalysts have opposite charges, the catalysts can be attracted to the outer surface 25 and can be deposited thereon. As another example, the outer surface 25 can be coated with a suitable metal-bearing polymer, such as one comprising iron-complexed polymethylglutarimide, polyferrocenylethylmethylsilane, iron-containing phenolic resin, and the like. Removal of carbonaceous material at high temperature can leave the outer surface 25 with catalysts deposited thereon to be used for carbon nanotube growth. As another example, the outer surface 25 can be coated with micelles formed in solution from diblock copolymers. Micelle cores can comprise polymer segments that comprise suitable metal groups. Examples of copolymers comprise polystyrene-b-Fe complexed polyvinylpyridine, polystyrene-b-polyferrocenylethylmethylsilane, polyisoprene-b-polyferrocenylethylmethylsilane, and the like. Micelle size and spacing can be determined by copolymer properties, thus allowing control over a density of the set of carbon nanotubes. Removal of carbonaceous material at high temperature can leave the outer surface 25 with catalysts deposited thereon to be used for carbon nanotube growth. As a further example, metal-containing monomer units, such as chloromethylsilaferrocenophane, can be attached to the outer surface 25 by reacting with hydroxyl functional groups on the outer surface 25. Infiltration with additional silaferrocenophane monomer followed by polymerization yields the outer surface 25 to which polyferrocenylsilanes can be directly attached. Catalyts can be formed on the outer surface 25 by removal of carbonaceous material, and the catalysts can be used for carbon nanotube growth.

Alternatively, or in conjunction, the set of carbon nanotubes can be formed using any of a wide variety of techniques and then deposited on the support particle 23. For example, the set of carbon nanotubes can be dispersed in a suitable solvent to form a "paint," and this paint can be applied to the outer surface 25. In some instances, the solvent can be relatively inert. However, it is also contemplated that the solvent can facilitate coupling between the set of carbon nanotubes and the outer surface 25. Heat can be applied to evaporate the solvent or to promote coupling. As another example, the set of carbon nanotubes can be sprayed at high velocity onto the support particle 23, such that the set of carbon nanotubes are coupled to the outer surface 25. In some instances, the alignment of the set of carbon nanotubes can be achieved by applying an electric field during deposition. However, it is also contemplated that the set of carbon nanotubes can be deposited on the support particle 23 so as to form a substantially random array.

While the invention has been described with reference to the specific embodiments thereof, it should be understood by those skilled in the art that various changes may be made and equivalents may be substituted without departing from the true spirit and scope of the invention as defined by the appended claims. In addition, many modifications may be made to adapt a particular situation, material, composition of matter, method, process operation or operations, to the objective, spirit and scope of the invention. All such modifications are intended to be within the scope of the claims appended hereto. In particular, while the methods disclosed herein have been described with reference to particular operations performed in a particular order, it will be understood that these operations may be combined, sub-divided, or re-ordered to form an equivalent method without departing from the teachings of the invention. Accordingly, unless specifically indicated herein, the order and grouping of the operations is not a limitation of the invention.

## Claims

1. A packing material (15) for a chromatography column (7), comprising:
(a) a support structure (17); and
(b) a stationary phase adjacent to the support structure and comprising a carbon nanotube material (19).

2. The packing material (15) of claim 1, wherein the support structure (17) comprises a support particle.

3. The packing material (15) of claim 2, wherein the support particle comprises a size in the range of 1 µm to 15 µm.

4. The packing material (15) of claim 2, wherein the stationary phase comprises a coating that comprises the carbon nanotube material (19).

5. The packing material (15) of claim 1, wherein the carbon nanotube material (19) provides an adsorbent surface.

6. The packing material (15) of claim 5, wherein the adsorbent surface is hydrophobic.

7. The packing material (15) of claim 6, wherein the adsorbent surface exhibits a contact angle with respect to water that is greater than 100°.

8. The packing material (15) of claim 7, wherein the contact angle is greater than 105°.

9. A chromatography column (7), comprising:
(a) a channel (11)defining a passageway (13); and
(b) a nanotube material (19) positioned in the passageway and providing an adsorbent surface.

10. The chromatography column (7) of claim 9, further comprising a support structure (17) positioned in the passageway (13), and the nanotube material (19) at least partly covers the support structure (17).

11. The chromatography column (7) of claim 9, wherein the nanotube material (19) comprises a set of carbon nanotubes.

12. The chromatography column (7) of claim 9, wherein the nanotube material (19) is configured to separate components of a chemical mixture passing through the chromatography column (7).

13. The chromatography column (7) of claim 12, wherein the components of the chemical mixture are selected from the group consisting of glycoproteins, glycopeptides, and oligosaccharides.

14. A chromatography system (1), comprising:
(a) a chromatography column (7) comprising a stationary phase that is exposed to a chemical mixture when the chemical mixture passes through the chromatography column (7), the stationary phase comprising a carbon nanotube material (19); and
(b) a detector (9) positioned with respect to the chromatography column (7) to detect components of the chemical mixture.

15. The chromatography system (1) of claim 14, wherein the chromatography column (7) further comprises a channel (11) defining a passageway (13), and the carbon nanotube material (19) is positioned in the passageway (13).

16. The chromatography system (1) of claim 14, wherein the carbon nanotube material (19) comprises a multi-walled structure.

17. The chromatography system (1) of claim 14, wherein the carbon nanotube material (19) comprises a single-walled structure.

18. A chromatography method, comprising:
(a) providing a chromatography column (7) comprising a carbon nanotube material (19); and
(b) passing a chemical mixture through the chromatography column (7) to separate components of the chemical mixture.

19. The chromatography method of claim 18, wherein the passing the chemical mixture comprises flowing the chemical mixture through the carbon nanotube material (19).
